# EUROPEAN PATENT SPECIFICATION

(11) **EP 0 588 619 B1**
(45) Date of publication and mention of the grant of the patent: **14.08.1996**
(21) Application number: 93307275.3
(22) Date of filing: 15.09.1993
(51) Int. Cl.: F24F 7/02, E04D 13/18

(54) **A lighting apparatus**
Beleuchtungseinrichtung
Dispositif d'éclairage

(30) Priority: 16.09.1992 DE 4230948
(43) Date of publication of application: 23.03.1994
(73) Proprietor: COLT INTERNATIONAL HOLDINGS A.G., CH-6340 Walterswil/Baar (CH)
(72) Inventor: Mikesch, Walter, Dipl.-Ing., CH-6300 Zug (CH)
(74) Representative: Greenwood, John David

(56) References cited:
- WO-A-84/02970
- US-A- 4 967 729
- US-A- 5 112 278
- SOVIET INVENTIONS ILLUSTRATED, Q section, week 9315, June 02, 1993 DERWENT PUBLICATIONS LTD., London & SU-A2-1707-452 (POLT)

## Description

This invention relates to a lighting apparatus having one or more light panels and formed in a triangular configuration in the transverse direction and provided with means for supporting the apparatus on a plinth surrounding a roof aperture of a building.

Lighting apparatus of the aforementioned type are used for lighting buildings with daylight, as roof elements, for example in the form of light lines, light strips and the like. If it is intended that lighting apparatus of this type should also provide for ventilation of the building interior, then usually individual light panel elements are arranged to be lifted up, operated by lifting mechanisms. This has the disadvantage that it becomes necessary also to provide rain sensors, and control elements which they activate, in order to close the lighting apparatus in the event of rainfall.

According to the present invention lighting apparatus of the type mentioned at the outset is characterised by the features indicated in the characterising part of claim 1. With regard to advantageous developments, reference is made to claims 2 to 9.

The ambient air/fresh air vent and the ventilator provide for both ventilation and also the supply of fresh air without the need for any openable light panels. Both fresh air ducts and also room air ducts can be provided in an externally harmonious way without the overall appearance of the lighting apparatus being adversely affected by visible means for opening the panels,and the like, which are, with the present invention, no longer necessary.

Weather-dependent control elements in the form of rain sensors and the like are not necessary. Instead, the ambient air/fresh air vent and the ventilator can be controlled manually and/or by room air temperature sensors according to the need for room air.

In a particularly advantageous manner, it is also possible to heat the room air which is discharged via the waste air orifice and to recycle it to the interior of the building via the room air duct. A particularly advantageous development of the lighting apparatus according to the invention provides for at least some of the light panels which have to be positioned on the south side of a building to be fitted with a solar cell panel unit a flow guidance space being provided between the solar cell and the covered panels. Consequently a flow guidance space is formed between the transparent glazing and solar panel unit, which can be connected to the room air duct preferably via a plurality of ambient air/fresh air vents. Expediently, a fan can be connected to the room air duct so that in winter room air can be extracted by the fan and heated under the heated solar cell surface. On the other side of the light strip which is consequently facing north, the room air which is heated in this way, possibly filtered and re-heated via an additional heating means, can be returned to the room. In this case, the ambient air/fresh air vent is set for 100% ambient air circulation.

In summer the ambient air/fresh air vent can be positioned for 100% fresh air. In this case it is possible via the fan for cold fresh air to be drawn in from the north side of the lighting apparatus. The ventilator needs to be opened in this case so that the warm air from the interior of the room can escape to the outside of the building.

The solar cell panel units can serve as a shading means so that the lighting apparatus has multi-functional properties in terms of natural lighting, venting and ventilation and can in addition also be used naturally for shading and energy recovery.

In so far as the solar cell unit is not used for heating the air, the solar panel unit can easily be used also for producing electrical energy.

An embodiment of the invention will now be described, by way of example only, with reference to the accompanying drawings, in which:
Figure 1 is a diagrammatic perspective view of an embodiment of lighting apparatus according to the present invention;
Figure 2 is an enlarged detail of the embodiment shown in Figure 1, set for summer operation; and
Figure 3 is a view similar to that in Figure 2 but with the apparatus set for winter operation.

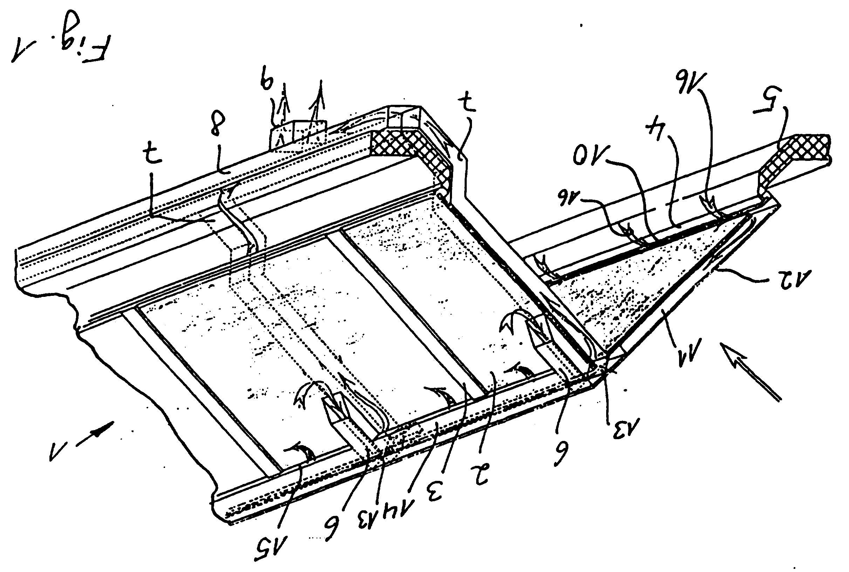

The lighting apparatus generally designated 1 in the drawings has, in the embodiment illustrated, a cross-sectionally overall triangular form and consists of serially disposed light panel elements 2 which are positioned both on the north side and also on the south side of a building, their glazing being supported by light panel frame profile struts 3 and basic profile struts 4 on a plinth 5 which surrounds a roof aperture of a building. On the north side, the right side of Figure 1, there are individual light panels 2 above which are fresh air ducts 6 which discharge into the environment. In a parallel arrangement, there are on the inside of these light panels 2 room air ducts 7. These room air ducts 7 discharge in a central duct 8 which is connected via a central aperture 9 into the interior of the building fitted with the light apparatus. In a manner not shown it is possible to connect a fan unit to this central duct 8 or central aperture 9.

On that side which is opposite the central orifice 9 and the central duct 8, and which is consequently on the south side of the lighting apparatus 1 in this embodiment, there is a central waste air orifice 10 which opens out into a flow guidance space 11 formed between the light panel glazing of the light panels 2 and a solar cell panel unit generally designated 12, and consequently the waste air orifice 10, and which covers the glazing at a distance from it. This flow guidance space 11 is connectable via ambience/fresh air vents 13 and a ventilator 14 to both the room air duct 7 and also to the waste air duct 15 in varying degrees.

The solar cell panel unit 12 is, between the solar cells, so transparent that a light permeability of for example 15% can still be achieved through this panel unit thus providing shading to the interior of the room.

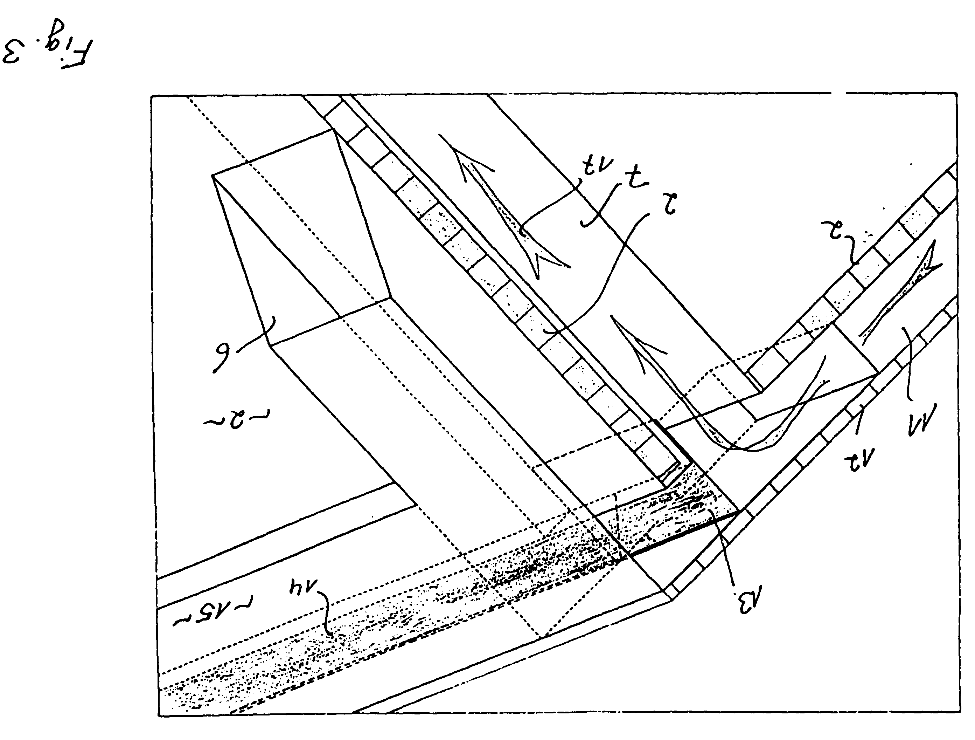

In winter, room air can be conveyed into the flow guidance space 11 via a fan (not shown), through the waste air orifice 10, as indicated by the arrows 16. The ambient air/fresh air vent 13 assumes a position, as illustrated in Figure 3, so that in accordance with the arrows 17, room air heated in the flow guidance space 11 via the solar cell panel unit 12 is fed in its re-heated state to the interior of the building via the room air duct 7, possibly after having been further re-heated by an additional heater unit which may be provided.

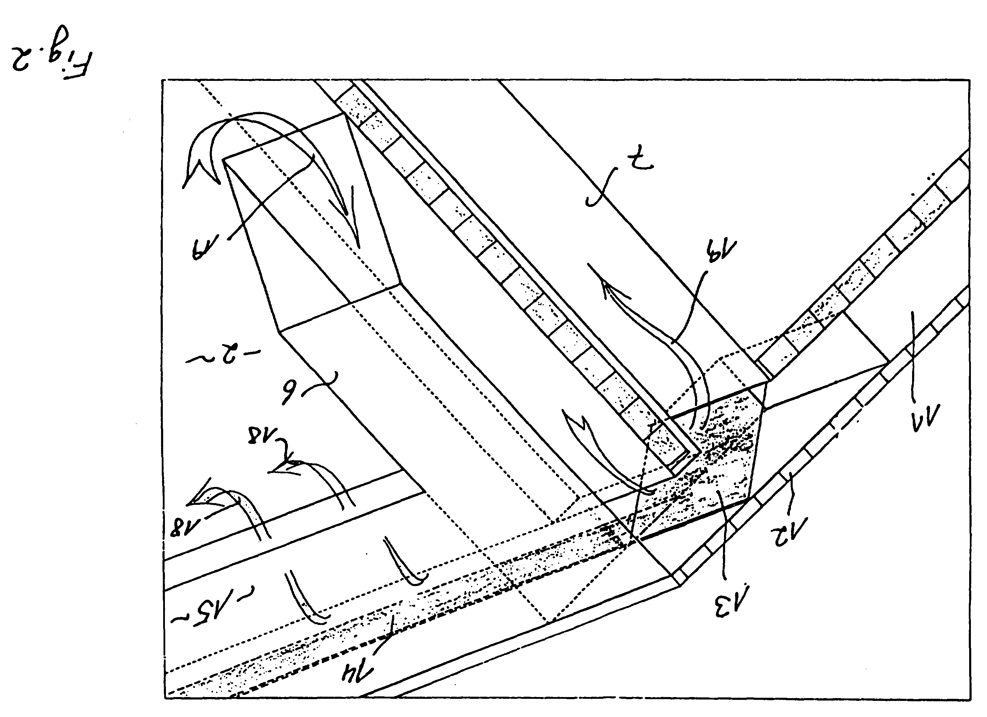

In summer time operation, as illustrated in Figure 2, the waste air is in a manner similar to that previously described, discharged via the waste air orifice 10, the ambient air/fresh air vents 13 however now closing off the room air duct 7 in respect of the flow guidance space 11 Figure 2. This flow guidance space 11 is however connected to the waste air duct 15 by the corresponding positioning of the ventilator 14, so that the waste air can be removed from the interior of the room and dispersed into the outside environment as indicated by the arrows 18. At the same time, in accordance with the arrows 19, fresh air is drawn in from the environment through the fresh air duct 6 and is fed to the room air duct 7 so that ventilation of the interior of the room can take place in parallel.

During the mid-season periods (Spring and Autumn), intermediate positions of the ambient air/fresh air vent 13 and of the ventilator 14 are possible so that fresh air and ambient air can be blended according to the fresh air and heat requirement. The entire system can be controlled via associated room temperature and duct sensors and control units (not shown). In so far as has been indicated, so also electrical energy can be obtained via the solar panel cell units 12.

## Claims

1. A lighting apparatus (1) for lighting buildings with daylight having one or more light panels (2) and formed in a triangular configuration in the transverse direction and provided with means (3,4) for supporting the apparatus on a plinth surrounding a roof aperture of a building so as to cover said aperture characterised in including a fresh air duct (6) and a waste air duct (15) each located above the light panels and each open to ambient air outside the building and closable by an ambient air/fresh air vent (13) and a ventilator (14), respectively, and in which the ventilator (14) is arranged to be able to selectively vary the degree of connection of the waste air duct (15) to a waste air orifice (10) which opens into the interior of the building, and the air/fresh air vent (13) is arranged to be able to selectively vary the degree of connection of a room air duct (7) located underneath the light panels to the fresh air duct (6) and the waste air orifice (10).

2. Apparatus as claimed in claim 1 in which the ambient air/fresh air vent (13) can vary the degree of connection of the room air duct (7) to the fresh air duct (6) and the waste air orifice (1) between connecting only either one or connecting both in varying proportions.

3. Apparatus as claimed in either one of claims 1 and 2 in which at least individual one light panel (2) is outwardly masked by a solar cell panel unit (12).

4. Apparatus as claimed in claim 3 in which the solar cell panel unit (12) and the light panels (2) covered thereby define a flow guidance space (11) which can be connected to the waste air orifice (10) and the room air duct (7).

5. Apparatus as claimed in any preceding claim in which the light panels (2) which are to be positioned on the south side of a building are covered by one or more solar cell panel units (12) while the lighting panels (2) which are to be disposed on the north side of the building are without such a covering of solar cell panel units (12).

6. Apparatus as claimed in any one claims 3 to 5 in which each solar cell panel units (12) forms a shading member.

7. Apparatus as claimed in claim 6 in which the solar cell panel unit (12) has a light permeability of at least 10%.

8. Apparatus as claimed in any preceding claim including a fan connected to the room air duct (7).

9. Apparatus as claimed in any preceding claim in which the fresh air re-circulating vent (13) and the ventilator (14) are arranged to be actuated by a temperature control unit as a function of the room air of the interior of the building.

## Patentansprüche

1. Beleuchtungseinrichtung zum Zuführen von Tageslicht in Gebäude mit einer oder mehreren Lichttafeln (2), wobei die Beleutungseinrichtung dreieckige transversale Querschnittsgeometrie hat und mit Mitteln (3, 4) versehen ist, über welche sie auf einem Sockel ruht, der eine Dachöffnung eines Gebäudes umgibt, so daß diese Dachöffnung durch die Beleuchtungseinrichtung überdeckt wird, dadurch gekennzeichnet, daß sie aufweist: einen Frischluftkanal (6) und einen Abluftkanal (15), die beide oberhalb der Lichttafeln angeordnet sind und mit der außerhalb des Gebäudes befindlichen Umgebungsatmosphäre in Verbindung stehen und die durch eine Umgebungsluft/ Frischluft-Klappe (13) bzw. eine Luftklappe (14) verschließbar sind, daß die Luftklappe (14) so angeordnet ist, daß sie wahlweise das Ausmaß einer Verbindung zwischen dem Abluftkanal (15) und einer Abluftöffnung (10) variiert, die sich in das Innere des Gebäudes öffnet, und daß die Luft/Frischluft-Klappe (13) so angeordnet ist, daß sie wahlweise das Ausmaß der Verbindung zwischen einem unter den Lichttafeln angeordneten Raumluftkanal (7) und dem Frischluftkanal (6) und der Abluftöffnung (10) variiert.

2. Einrichtung nach Anspruch 1, bei welcher die Umgebungsluft/Frischluft-Klappe (13) das Ausmaß der Verbindung zwischen dem Raumluftkanal (7) zum Frischluftkanal (6) und der Abluftöffnung (10) umstellen kann zwischen einem Herstellen einer Verbindung mit nur einem der beiden vorgenannten Anschlüsse oder dem Herstellen einer Verbindung zu beiden der vorgenannten Anschlüsse, jeweils in veränderlichem Ausmaß.

3. Einrichtung nach Anspruch 1 oder 2, bei welcher zumindestens eine individuelle Lichttafel (2) nach außen durch eine Solarzellentafeleinheit maskiert ist.

4. Einrichtung nach Anspruch 3, bei welcher die Solar zellentafeleinheit (12) und die hierduch abgedeckten Lichttafeln (2) einen Strömungsführungsraum (11) begrenzen, welcher mit der Abluftöffnung (10) und dem Raumluftkanal (7) verbunden werden kann.

5. Einrichtung nach einem der vorhergehenden Ansprüche, bei welcher die Lichttafeln (2), die auf der Südseite eines Gebäudes angeordnet sind, durch eine oder mehrere Solarzellentafeleinheiten (12) bedeckt sind, während die Lichttafeln (2), die auf der Nordseite des Gebäudes angeordnet sind, ohne eine solche Überdeckung durch Solarzellentafeleinheiten (12) angebracht sind.

6. Einrichtung nach einem der Ansprüche 3 bis 5, bei welcher jede der Solarzellen-tafeleinheiten (12) ein Abschattungsteil darstellt.

7. Einrichtung nach Anspruch 6, bei welcher die Solar zellentafeleinheit (12) eine Lichtdurchlässigkeit von mindestens 10% aufweist.

8. Einrichtung nach einem der vorhergehenden Ansprüche, mit einem Gebläse, welches mit dem Raumluftkanal (7) verbunden ist.

9. Einrichtung nach einem der vorhergehenden Ansprüche, bei welcher die Frischluft rückführende Klappe (13) und die Luftklappe (14) so angeordnet sind, daß sie durch eine Temperatursteuereinheit in Abhängigkeit von der im Inneren des Gebäudes herrschenden Raumtemperatur betätigt werden.

## Revendications

1. Appareil (1) d'éclairage de bâtiment par la lumière du jour, ayant un ou plusieurs panneaux d'éclairage (2) et réalisé avec une configuration triangulaire en direction transversale et comportant un dispositif (3, 4) de support de l'appareil sur une plinthe entourant un orifice du toit d'un bâtiment de manière que l'orifice soit couvert, caractérisé en ce qu'il comprend un conduit (6) d'air frais et un conduit (15) d'air usé placés chacun au-dessus des panneaux d'éclairage, débouchant chacun dans l'air ambiant à l'extérieur du bâtiment et pouvant être fermés par un organe (13) de ventilation placé entre l'air ambiant et l'air frais et un ventilateur (14) respectivement, et en ce que le ventilateur (14) est disposé afin qu'il permette une variation sélective du degré de raccordement du conduit (15) d'air usé et d'un orifice (10) d'air usé qui débouche à l'intérieur du bâtiment, et l'organe (13) de ventilation placé entre l'air ambiant et l'air frais est destiné à faire varier sélectivement le degré de raccordement d'un conduit (7) d'air confiné placé sous les panneaux d'éclairage et du conduit (6) d'air frais et de l'orifice (10) d'air usé.

2. Appareil selon la revendication 1, dans lequel l'organe (13) de ventilation placé entre l'air ambiant et l'air frais peut faire varier le degré de raccordement du conduit (7) d'air confiné et du conduit (6) d'air frais et l'orifice (10) d'air usé, entre le raccordement d'un seul conduit et le raccordement des deux en proportions variables.

3. Appareil selon l'une des revendications 1 et 2, dans lequel un panneau d'éclairage individuel (2) au moins est masqué vers l'extérieur par une unité (12) à panneau de cellules solaires.

4. Appareil selon la revendication 3, dans lequel l'unité (12) à panneau de cellules solaires et les panneaux d'éclairage (2) revêtus par celle-ci délimitent un espace (11) de guidage de circulation qui peut être relié à l'orifice (10) d'air usé et au conduit (7) d'air confiné.

5. Appareil selon l'une quelconque des revendications précédentes, dans lequel les panneaux d'éclairage (2) qui doivent être placés du côté sud d'un bâtiment sont recouverts d'un ou plusieurs ensembles (12) à panneau de cellules solaires alors que les panneaux d'éclairage (2) qui doivent être placés du côté nord du bâtiment n'ont pas de couverture formée par les ensembles (12) à panneau de cellules solaires.

6. Appareil selon l'une des revendications 3 à 5, dans lequel chaque ensemble (12) à panneau de cellules solaires forme un organe de protection contre la lumière.

7. Appareil selon la revendication 6, dans lequel l'ensemble (12) à panneau de cellules solaires a une perméabilité à la lumière d'au moins 10 %.

8. Appareil selon l'une quelconque des revendications précédentes, comprenant un ventilateur raccordé au conduit (7) d'air confiné.

9. Appareil selon l'une quelconque des revendications précédentes, dans lequel l'organe (13) de ventilation destiné à faire recirculer de l'air frais et le ventilateur (14) sont destinés à être manoeuvrés par un ensemble de réglage de température en fonction de l'air confiné de l'intérieur du bâtiment.
